# EUROPEAN PATENT APPLICATION

(11) **EP 1 313 115 A2**
(43) Date of publication of application: **21.05.2003**
(21) Application number: 02257865.2
(22) Date of filing: 14.11.2002
(51) Int. Cl.: H01G 9/035

(54) **Electrolyte for electrolytic capacitor**

(30) Priority: 14.11.2001 US 332699 P
(71) Applicant: Wilson Greatbatch Technologies, Inc., Clarence, New York 14031 (US)
(72) Inventor: Liu, Yanming, Clarence Center, New York 14032 (US); Shah, Ashish, East Amherst, New York 14051 (US); Muffoletto, Barry, Alden, New York 14004 (US)
(74) Representative: Colmer, Stephen Gary

(57) **Abstract**

The present invention is directed to a water based electrolyte used in a hybrid-type capacitor. The hybrid-type capacitor has an electrolytic anode and an electrochemical cathode. The difference resides in the electrolyte for this type of capacitor. The electrolyte has water, a water soluble inorganic and/or organic acid and/or salt, and a water soluble nitro-aromatic compound. Such a hybrid capacitor (1) improves energy density by significantly reducing volume of the separator and cathode material often used in conventional electrolytic capacitors and (2) has an electrochemical cathode that undergoes an electrochemical reduction without generating gassing. For example, ruthenium oxide, RuO₂, is reduced to ruthenium hydroxide, Ru(OH)₂, when passing a cathodic current. However, the present invention discovered that without the present electrolyte, the RuO₂ cathode does generate gassing if it is sufficiently depleted. The gassing degrades capacitor performance and even causes failure, which is decreased with the present electrolyte solution.

## Description

### CROSS-REFERENCE TO RELATED APPLICATION

This application claims priority from U.S. provisional application Serial No. 60/332,699, filed on November 14, 2001.

### BACKGROUND OF THE INVENTION

### 1. Field of the Invention

This invention is directed to decreasing gassing that occurs in electrolytic-electrochemical hybrid capacitors.

### 2. Prior Art

In 1987, Mr. Gary Buczkowski and Mr. Walter J. Bernard published an article entitled "Hydrogen Evolution in Aluminum Electrolytic Capacitors" in an IEEE publication. In that article, they wrote, "the use of aluminum electrolytic capacitors (Al capacitors) in high reliability applications, particular in military roles, has become increasingly widespread. This trend is expected to continue. Thus the question of the overall operational safety aspects of Al capacitors is of paramount importance. One aspect of this question is hydrogen evolution within the capacitors.

"For many years electronic circuit designers have known that aluminum electrolytic capacitors generate hydrogen which accumulates within the capacitor enclosure and is also transmitted to the environment outside the capacitor.

"All electrolytic capacitors [would] generate hydrogen at the cathode whenever a [current is passed through] their terminals (i.e., when the unit is energized) due to electrolysis of water. [The gas generation is proportional to the DC leakage of capacitors].

"Every [electrochemical] device that contains water may generate hydrogen, e.g., batteries, and, of course, so-called 'wet' tantalum capacitors.

"Thus hydrogen evolution is a normal, albeit undesirable, half cell-reaction that occurs during operation of these [electrolytic] capacitors, but it is not unique to the Al capacitor.

"Circuit designers have sometimes avoided Al capacitors, at least in part, because they perceived hydrogen generation to be an exceptional hazard. . . . But in the late 1960s a partial solution was found in the use of, for example, aromatic nitro compounds. These compounds act as cathode depolarizers which are electrochemically reduced, in preference to the hydrogen evolution reaction.

"The effectiveness of depolarizers is related to the absolute amount of the material in the working electrolyte. Eventually they are consumed in the reaction and become inert. Another consideration is the coulombic efficiency of the depolarizer reaction. These limitations combine to limit the efficacy of depolarizers. In traditional Al capacitors, with [operation] lives of from 1000 hours to 2000 hours, depolarizers have functioned well.

"Hence, cathode depolarizers have a limited, albeit important, effectiveness in capacitors with a designed lifetime of more than several thousand hours."

In U.S. Patent No. 5,160,653, Clouse et al. disclose a high voltage capacitor, which appears to be an aluminum capacitor, having an anode, a cathode and a liquid electrolyte. The liquid electrolyte has:
1) at least 40 weight percent of N-substituted pyrrolidones,
2) at most about 8 weight percent water,
3) inorganic and organic salts, and
4) "other additives commonly used in capacitor electrolytes may be present in minor amounts . . . (for example) p-nitrobenzoic acid is present at a level of about 0.04% to about 0.06% (which conforms with all examples set forth in the '653 patent)."

To those of ordinary skill in the art, the liquid electrolyte of the '653 patent is considered a non-aqueous electrolyte since the water percentage is less than about 8 weight percent. And, if the water weight percentage is less than about 8 weight percent, then it is not possible to compare non-aqueous electrolytes to water-based electrolytes since both types are distinct. For example, non-aqueous electrolytes avoid having alcohol compounds, like glycol, in the composition because, as stated by Clouse et al. in the '653 patent, such alcohol compounds are deleterious in non-aqueous electrolytes.

The present invention solves the gassing problems in water based electrolytes used in electrolytic-electrochemical hybrid capacitors.

### SUMMARY OF THE INVENTION

The present invention is directed to a water based electrolyte used in a hybrid-type capacitor. As expected, the capacitor has an electrolytic anode and an electrochemical cathode. The difference resides in the electrolyte for this type of capacitor. The electrolyte has water, a water soluble inorganic and/or organic salt, and a water soluble nitro-aromatic compound. This combination diminishes gassing of the water based electrolyte once the electrochemical cathode is sufficiently depleted, and increases non-gassing operation life. Such a hybrid capacitor (1) improves energy density by significantly reducing volume of the separator and cathode material often used in conventional electrolytic capacitors and (2) has an electrochemical cathode that undergoes an electrochemical reduction without generating gassing. For example, ruthenium oxide, RuO₂, is reduced to ruthenium hydroxide, Ru (OH)₂, when passing a cathodic current. However, the present invention discovered that without the present electrolyte, the RuO₂ cathode does generate gassing if it is sufficiently depleted. The gassing degrades capacitor performance and even causes failure, which is decreased with the present electrolyte solution.

### BRIEF DESCRIPTION OF THE DRAWINGS

Figure 1 is a comparison graph of hybrid capacitors activated with a water based electrolyte provided with and devoid of a nitro-aromatic compound, respectively, and the change of thickness in the respective capacitors over time and at a maintained voltage.

Figure 2 is a comparison graph of the effect of a water based electrolyte provided with and devoid of a nitro-aromatic compound activating respective hybrid capacitors and showing the maximum capacity in coulombs per milligram of ruthenium oxide coating prior to gassing.

### DETAILED DESCRIPTION OF THE PREFERRED EMBODIMENTS

The present invention is directed to a water-based electrolyte solution used with a hybrid capacitor. Hybrid capacitors are well known; hence we will not discuss them in great detail. Hybrid capacitors have an anode, an electrochemical cathode, and, for this invention, a water based electrolyte.

For a hybrid capacitor, the anode can be a sintered powder or a foil of a Group IVB and VB metal or aluminum metal. For this application, the Group IVB and VB metals are defined as tantalum, niobium, vanadium, titanium, zirconium, and hafnium.

The cathode is an electrochemical cathode having any transition metal oxide, carbide, nitride, oxy-nitride. And in particular, the cathode is ruthenium oxide.

The remaining portion of this application will be directed to the type of electrolyte used in the hybrid capacitor. As stated previously, the electrolyte used in this hybrid capacitor is a water based electrolyte.

Water is at least 30 weight percent of the water based electrolytes (preferably 30-90 weight percent and most preferably around 50-70 weight percent), and at least some water-soluble inorganic and/or organic acids and/or salts to assist the electrical conductivity. These water-soluble inorganic acids and/or salts are and not limited to acetic acid, ammonium acetate, potassium acetate, sodium acetate, ammonium phosphate, potassium phosphate, sodium phosphate, phosphoric acid, boric acid, ammonium borate, potassium borate, sodium borate, ammonium formate, potassium formate, sodium formate, formic acid, ammonium sulfate, potassium sulfate, sodium sulfate, and sulfuric acid. The water-soluble organic acids and/or salts are not limited to water soluble organic carboxylic acid and/or carboxylates. These salts normally comprise at least 1-50 weight percent of the water-based electrolyte composition.

The electrolyte may also contain an anode stabilizer such as phosphoric acid and a water soluble ammonium, potassium, sodium or organic salts of phosphate of silicate.

The water based electrolyte may also have a co-solvent. The co-solvent is a polyol compound, normally a diol compound. The diol or polyol is preferably ethylene glycol, propylene glycol, polyethylene glycol, and/or polypropylene glycol. The polyol compound is designed to adjust the water based electrolyte to possess a desired physical property. This can be a desired freezing point, vapor pressure point, and/or viscosity of the water based electrolyte. To obtain these desired physical properties, the polyol solvent can be from 1 to 50 weight percent of the water based electrolyte composition. And those of ordinary skill in the art can adjust the amount of polyol compound to obtained the desired physical property.

The water based electrolyte, with a polyol co-solvent, requires a water soluble nitro-aromatic compound. The nitro-aromatic compound is a known degassing agent for electrolytic capacitors. The use of water soluble nitro-aromatic compounds for water based electrolytes in hybrid capacitors has, according to the inventors, never been disclosed or suggested. In fact, the prior art in U.S. Patent No. 5,160,653 to Clouse et al. teaches against the combination of nitro-aromatic compounds, polyol co-solvents, anode stabilizers, and water to form water based electrolytes for any type of capacitor -- and never a hybrid capacitor. This negative teaching, however, has been found by the present inventors to be erroneous.

The phenomena of capacitor swelling (internal gas generation) can degrade capacitor electrical properties, and, in some cases, can even cause failure. Water soluble nitro-aromatic compounds are added (0.1 to 10, preferred 0.1 to 1.0, weight percent of the water based electrolyte) as a depolarizer in electrolytes to minimize hybrid capacitor swelling, and improve reliability of the hybrid capacitor's long term operation.

Any nitro-aromatic compound having adequate solubility in the electrolytes, mono- or multi-substituted, can be used for this purpose, including, for example: 2-nitroacetophenone; 3-nitroacetophenone; 4-nitroacetophenone; 2-nitroanisole; 3-nitroanisole; 4-nitroanisole; 2-nitrobenzaldehyde; 3-nitrobenzaldehyde; 4-nitrobenzaldehyde; 2-nitrobenzoic acid; 3-nitrobenzoic acid; 4-nitrobenzoic acid; 2-nitrobenzyl alcohol; 3-nitrobenzyl alcohol; 4-nitrobenzyl alcohol; 2-nitrophenol; 3-nitrophenol; 4-nitrophenol; 2-nitrophthalic acid; 3-nitrophthalic acid; 4-nitrophthalic acid; 2-nitrobenzamide; 3-nitrobenzamide; 4-nitrobenzamide; and mixtures thereof.

Other useful depolarizers include and are not limited to nitrosoaromatics, azobenzenes, and quinones. The selection of the nitro-aromatic compounds is such that it: (1) is reduced prior to water being reduced, (2) is reduced to products that are not gaseous, (3) does not interfere or harm the capacitor's performance, (4) is reasonably water soluble for the electrolytic composition, and (5) is chemically compatible with the capacitor's materials.

In particular, the present inventors have conducted studies that illustrate that the present invention of incorporating water soluble nitro-aromatic compounds into water based electrolytes for hybrid capacitors is superior to those electrolytes without the nitro-aromatic compounds. These studies used the following water-based electrolyte compositions in hybrid capacitors having an RuO₂ cathode:

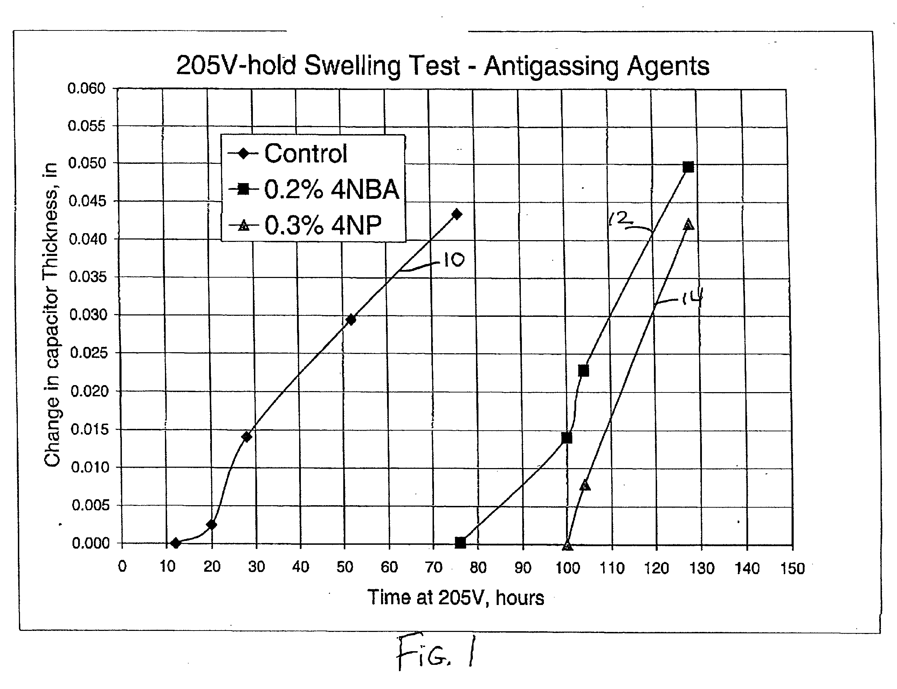

The control composition, identified in
Figure 1 as 10, is as follows:

| | |
|---|---|
| Water | 2144 g |
| Ethylene Glycol | 1033 g |
| Ammonium Acetate | 627 g |
| Acetic Acid | 622 g |
| H₃PO₄ | 16.2 g |

The composition, identified in Figure 1 as 12, is of the control composition plus 0.2% NBA as follows:

| | |
|---|---|
| Water | 2144 g |
| Ethylene Glycol | 1033 g |
| Ammonium Acetate | 627 g |
| Acetic Acid | 622 g |
| H₃PO₄ | 16.2 g |
| 4-nitrobenzoic acid (4-NBA) | 8.9 g |

The composition, identified in Figure 1 as 14, is of the control composition plus 0.3% 4-N as follows:

| | |
|---|---|
| Water | 2144 g |
| Ethylene Glycol | 1033 g |
| Ammonium Acetate | 627 g |
| Acetic Acid | 622 g |
| H₃PO₄ | 16.2 g |
| 4-nitrophenol (4-NP) | 13.3 g |

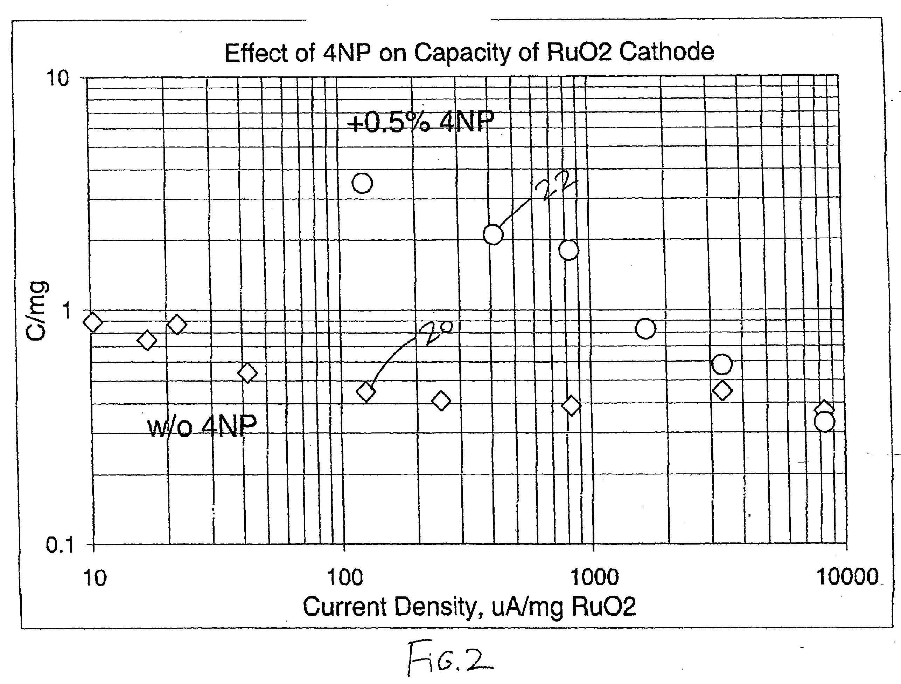

The control composition, identified in Figure 2 as 20, is as follows:

| | |
|---|---|
| Water | 1995 g |
| Ethylene Glycol | 1052 g |
| Ammonium Acetate | 561 g |
| Acetic Acid | 560 g |
| H₃PO₄ | 15.2 g |

The composition, identified in Figure 2 as 22, is of the control composition plus 0.5% 4-NP as follows:

| | |
|---|---|
| Water | 1995 g |
| Ethylene Glycol | 1052 g |
| Ammonium Acetate | 561 g |
| Acetic Acid | 560 g |
| H₃PO₄ | 15.2 g |
| 4-NP | 20.9 g |

Figure 1 illustrates the average change in thickness of hybrid capacitors having the above-identified water based electrolytes and being connected to a 205V hold, over time. This graph clearly illustrates that a water based electrolyte, not having any water soluble nitro-aromatic compound, initiates gassing after about 10 hours. In contrast, the addition of a water soluble nitro-aromatic compound to a water based electrolyte in a hybrid capacitor does not result in any gassing until at least 75 hours. This significant time differential (10 hours to at least 75 hours) would not have been expected from the teachings of the prior art. Accordingly, it is applicant's opinion that this significant differential which decreases the gassing and thus the expansion of the capacitor's thickness is patentable.

To further confirm this observation, applicants conducted a second study that measured the maximum non-gassing capacity, the maximum charge allowed before the onset of gassing. In particular, Figure 2 illustrates the non-gassing coulombs/mg of cathode as a function of the current density passing through the cathode. This graph illustrates the enhanced non-gassing capacity (more charge to pass before the on-set of gassing) of a hybrid capacitor having a RuO₂ cathode and a water based electrolyte with a water soluble nitro-aromatic compound. The improvement is greater when the current density is decreased.

## Claims

1. A water based electrolyte having an electrolytic anode and an electrochemical cathode wherein:
a) at least 30 weight percent of the water based electrolyte is water;
b) 1 to 50 weight percent of the water based electrolyte is a water soluble inorganic and/or organic acid and/or salt to act as a conductor within the water based electrolyte; and
c) 0.1 to 10 weight percent of the water based electrolyte is a water soluble nitro-aromatic compound to diminish gassing of the water based electrolyte once the electrochemical cathode is sufficiently depleted.

2. The water based electrolyte of Claim 1 further comprising (d) a sufficient amount of a polyol co-solvent to obtain a desired physical property (for example, freezing point, vapour pressure point and/or viscosity) of the water based electrolyte.

3. The water based electrolyte of Claim 1 or Claim 2 wherein the amounts of a), b), c) and, optionally d) are effective to improve the capacitance of a capacitor comprising the electrolyte when its current density is increased.

4. The water based electrolyte of Claim 2 or 3 wherein the sufficient amount of the polyol co-solvent is 0.01 to 50 weight percent of the water based electrolyte.

5. The water based electrolyte of Claim 4 wherein the polyol co-solvent is a diol compound.

6. The water based electrolyte of Claim 5 wherein the diol compound is selected from the group consisting of ethylene glycol, propylene glycol, polyethylene glycol and polypropylene glycol.

7. The water based electrolyte of any one of the preceding claims wherein water soluble inorganic acids and/or salts are selected from the group consisting of acetic acid, ammonium acetate, potassium acetate, sodium acetate, ammonium phosphate, potassium phosphate, sodium phosphate, phosphoric acid, boric acid, ammonium borate, potassium borate, sodium borate, ammonium formate, potassium formate, sodium formate, formic acid, ammonium sulfate, potassium sulfate, sodium sulfate, and sulfuric acid.

8. The water based electrolyte of any one of the preceding claims wherein the organic acids and/or salts are water soluble organic carboxylates and/or carboxylic acid.

9. the water based electrolyte of any one of the preceding claims wherein the ratio of inorganic and/or organic acids and/or salts is 1 to 50 weight percent of the water based electrolyte.

10. the water based electrolyte of any one of the preceding claims wherein water soluble nitro-aromatic compound is selected from the group consisting of 2-nitroacetophenone; 3-nitroacetophenone; 4-nitroacetophenone; 2-nitroanisole, 3-nitroanisole; 4-nitroanisole; 2-nitrobenzaldehyde; 3-nitrobenzaldehyde; 4-nitrobenzaldehyde; 2-nitrobenzoic acid; 3-nitrobenzoic acid; 4-nitrobenzoic acid; 2-nitrobenzyl alcohol; 3-nitrobenzyl alcohol; 4-nitrobenzyl alcohol; 2-nitrophenol; 3-nitrophenol; 4-nitrophenol; 2-nitrophthalic acid; 3-nitrophthalic acid; 4-nitrophthalic acid; 2-nitrobenzamide; 3-nitrobenzamide; 4-nitrobenzamide; and mixtures thereof.

11. The water based electrolyte of any one of the preceding claims wherein the nitro-aromatic compound is selected from the group consisting of water soluble nitrosoaromatics; water soluble azobenzenes; water soluble quinones; and mixtures thereof.

12. The water based electrolyte of any one of the preceding claims wherein the water soluble nitro-aromatic compound is 0.1 to 1.0 weight percent of the water based electrolyte.

13. The water based electrolyte of any one of the preceding claims further comprising an anode stabilizer.

14. The water based electrolyte of Claim 13 wherein the anode stabilizer is 0.01 to 5 weight percent of the water based electrolyte.

15. The water based electrolyte of Claim 13 or 14 wherein the anode stabilizer is selected from the group consisting of ammonium phosphate, ammonium silicate, phosphoric acid, potassium phosphate, potassium silicate, sodium silicate, sodium phosphate, water soluble organic silicates, and water soluble organic phosphates.

16. A capacitor which includes a water based electrolyte according to any one of the preceding claims.

17. A capacitor according to Claim 16 wherein the anode comprises a sintered powder or foil of a Group IVB or VB metal, or aluminum metal.

18. A capacitor according to Claim 16 or 17 wherein the cathode comprises a transition metal oxide, carbide, nitride or oxy-nitride.
